# EUROPEAN PATENT SPECIFICATION

(11) **EP 2 011 713 B1**
(45) Date of publication and mention of the grant of the patent: **26.01.2011**
(21) Application number: 08158635.6
(22) Date of filing: 19.06.2008
(51) Int. Cl.: B61D 15/06, B61G 11/16

(54) **Collapsible element for absorbing energy in case of collision in a railway vehicle**
Knautschelement zur Aufnahme von Aufprallenergie in einem Schienenfahrzeug
Élément déformable d'absorption d'énergie en cas de choc dans un véhicule ferroviaire

(30) Priority: 20.06.2007 IT TO20070443
(43) Date of publication of application: 07.01.2009
(73) Proprietor: ANSALDOBREDA S.p.A., 80147 Napoli (IT)
(72) Inventor: Lenzi, Luca, 51034 Cantagrillo (IT)
(74) Representative: Jorio, Paolo

(56) References cited:
- EP-A- 1 746 007
- WO-A-2006/024059

## Description

The present invention relates to a collapsible element for absorbing energy in case of collision in a railway vehicle.

It is known that the railway vehicle wagons and locomotives have elements or structures, at their ends, in charge of absorbing energy in case of frontal collision. For example, it is known to provide a pair of collapsible elements, which are overhangingly mounted at the end of the wagon or of the locomotive along corresponding horizontal axes parallel to the longitudinal direction of the vehicle, are arranged in transversally and reciprocally spaced positions and generally comprise boxed bodies which carry an anti-climber plate at one end. The horizontal axes of the collapsible elements are at a height from the ground so that, in case of accident, the anti-climber plates come into contact against corresponding anti-climber plates and prevent a relative sliding in a vertical direction to avoid the wagons from lifting.

At the same time, the boxed bodies absorb kinetic energy by deforming themselves, i.e. by converting such a kinetic energy into plastic deformation energy, until appropriate stroke end buffers limit the deformation thereof.

In practice, when the anti-climber plates come into reciprocal contact during a collision, the corresponding collapsible elements are never perfectly coaxial but there is an offset in the vertical direction. Such an offset generates an asymmetric division of the load between the boxed bodies and a rotation of the anti-climber plate, thereby the total amount of energy actually absorbed is less than that specified in the designing step. In order to solve such a drawback, it is possible to provide a guiding seat in a fixed rear plate which supports the boxed bodies to guide a horizontal stem fixed onto the rear face of the anti-climber plate. A solution of this type is, for example, described in the international patent application published under number WO2006/024059A2.

This type of known solution is relatively cumbersome, because it requires a relative large free space behind the fixed rear plate to allow the whole stem to freely slide during the collision and to allow the plastic deformation of the boxed body. Specifically, in general, such a type of solution may not be used on railway vehicles already in operation to replace the collapsible elements of known type without the guiding device, because it would be rather complex to obtain additional free space behind the collapsible elements.

EP1746007 discloses an impact energy absorbing device for a rail vehicle, comprising at least one elongated energy absorbing element and a contact element mounted to an end of the energy absorbing element. A plurality of stiffening plates and a guide device are provided within the inner space of the absorbing element space. The guide device comprises four elongated guiding elements cooperating with corresponding mating recesses of the stiffening plates.

It is the object of the present invention to make a collapsible element for absorbing energy in case of collision in a railway vehicle, which allows to simply and cost-effectively solve the aforementioned problems.

According to the present invention, a collapsible element for absorbing energy in case of collision in a railway vehicle is provided, as defined in claim 1.

The invention will now be described with reference to the accompanying drawings which illustrate a non-limitative embodiment thereof, in which:
- figure 1 is a perspective view of a preferred embodiment of the collapsible element for absorbing energy in case of collision in a railway vehicle, according to the present invention;
- figure 2 is a diagrammatic side view of the collapsible element in figure 1 during a first step of collision against a corresponding collapsible element; and
- figure 3 is a perspective view which shows a final step of the collision.

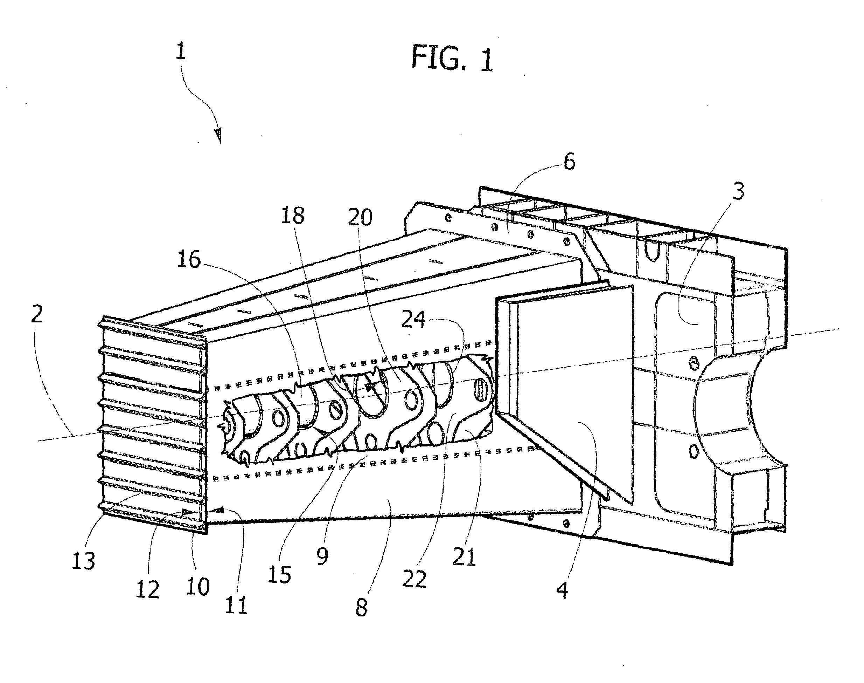

In figure 1, numeral 1 indicates as a whole a collapsible element for absorbing energy in case of collision in a railway vehicle (not shown). The element 1 overhangingly extends along an axis 2 essentially horizontal and parallel to the longitudinal direction of the vehicle, starting from a transverse supporting transom 3 (partially shown), which is of the boxed type and is part of the end of a railway vehicle wagon or car or locomotive.

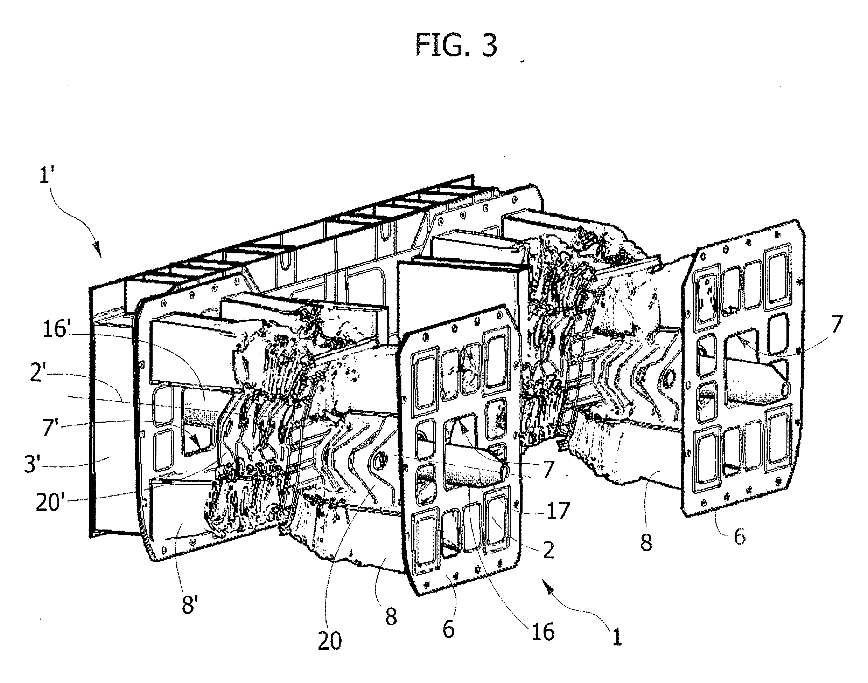

The element 1 is arranged by the side of an end stroke buffer 4, which is essentially rigid and is fixed to the transom 3; the element 1, as a whole, has a pyramidal-frustum shape which spreads towards the transom 3. The element 1 comprises a rear final plate 6, which is fixed to the transom 3 and has a central, essentially rectangular opening 7 (figure 3), elongated in a vertical direction. The element 1 further comprises four tubular or boxed bodies 8, which are plastically deformable by compression, are arranged along the side edges of the element 1, have a quadrangular cross section, and essentially have a conical-frustum shape which spreads towards the transom 3 for increasing the energy absorbed according to the increase of the compression stroke along the axis 2.

The element 1 comprises a covering 9 along the four sides of the element 1 to cover the bodies 8.

A vertical front plate 10 has a rear face 11 fixed to the ends of the bodies 8 and a front face 12 which carries a plurality of horizontal ribs or teeth 13, or other equivalent devices, in fixed positions to serve an anti-climbing function when the plate 10 comes into contact, during an accident, with a corresponding anti-climber plate of a crashed wagon or car. The dimensions, the reciprocal distance and the number of teeth 13 is such to limit the possibility of reciprocally sliding in vertical direction between the anti-climber plates: eight teeth 13 are provided with a full triangular cross section, welded onto the face 12 in equally spaced positions in a vertical direction, protruding by about 25 mm with respect to the face 12, and having a vertex angle equal to about 60°.

The element 1 then comprises a guiding device 15 for securing the rotation of the plate 10 during the collision and the plastic deformation of the bodies 8, so that the plate 10 uniformly divides the load on the bodies 8 making the element 1 correctly work and absorb the amount of energy specified in the designing step.

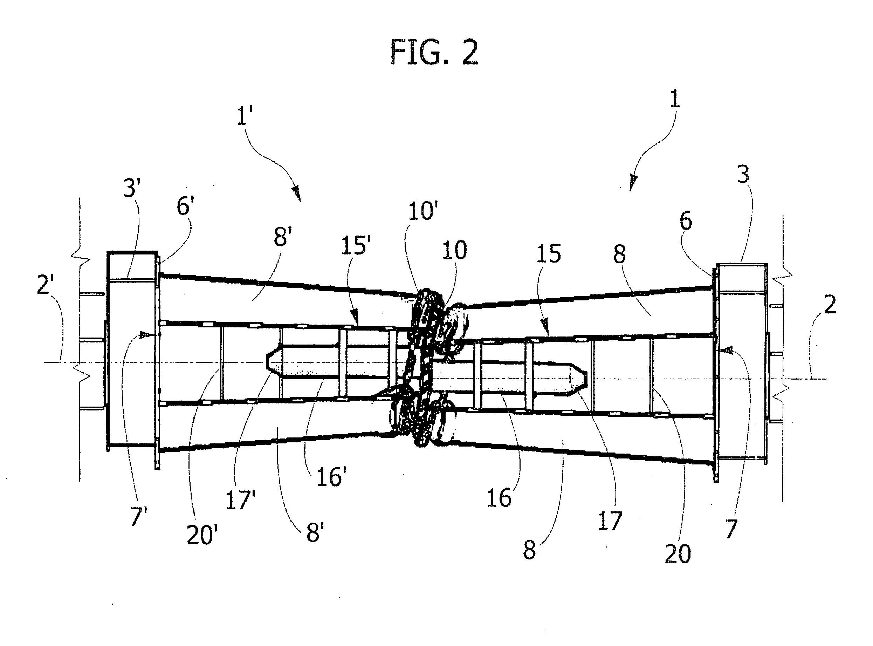

The device 15 comprises a stem 16, which is fixed onto the face 11, e.g. by welding, extends along axis 2 between the bodies 8 and has an axial length shorter than that of the bodies 8 (approximately 60%). The stem 16 is cylindrical and tubular, with a thickness of approximately 6 mm and an external diameter of approximately 12 mm and ends with a conical-frustum-shaped head 17 (figures 2 and 3).

The device 15 then comprises a plurality of guiding seats 18, specifically five, which are coaxial to each other and to the opening 7, are equally spaced along the axis 2, and are carried by corresponding partitions 20 fixed to the bodies 8 and to the covering 9 by welding. The external diameter of the stem 16 rounds down the internal diameter of the seats 18 and is smaller than the dimensions of the opening 7.

At least three of the five seats 18 are engaged by the stem 16 when the element 1 is in undeformed condition to ensure a good stability during axial sliding of the stem 16 and to divide the stresses transferred by the plate 10 onto the partitions 20 and thus onto the bodies 8 in a distributed manner along the axis 2 from the very beginning of the collision and of the plastic deformation.

The partitions 20 are not flat with constant thickness but have a varying thickness: the periphery 21 has a thickness of approximately 2 mm, while the central portion 22, about the guiding seats 18, has a thickness of approximately 6 mm. In other words, the central portion 22 is reinforced as compared to the periphery 21. To make the partitions 20, starting from a 6 mm thick sheet, the thickness in excess on the periphery 21 is removed by milling from only one face of the partition 20. In this manner, one of the two faces is flat, while the milled face has a step which divides the periphery 21 from the central portion 22.

Preferably, the guiding seats 20 are defined by corresponding collars 24, which are coupled to the inner circular edge of the central portions 22 and are less thick than the portions 22, e.g. have a thickness of 2 mm, to limit the contact surface with the stem 16 and to reduce frictions and the occurrence of excessive longitudinal forces associated to the friction.

Figures 2 and 3 show an initial step and a final step of a collision between two cars or wagons which each carry a corresponding pair of reciprocally equivalent collapsible elements. The components of the collapsible elements are indicated by the same reference numbers used in figure 1, but for one of the two pairs the reference numbers are followed by a subscript for reasons of clarity.

The distance between the elements 1 on the transom 3 is the same as the distance between the elements 1' on the transom 3'. In the assumed collision conditions, the axes 2 and 2' are reciprocally spaced in a vertical direction by an offset equal to approximately 40 mm.

Figure 2 relates to a condition in which approximately 3 milliseconds have elapsed since the beginning of the collision: the plates 10, 10' have taken a slight "S"-shaped deformation, which does not tend to further increase in virtue of the device 15.

Indeed, during the collision the element 1 is axially shortened and the stem 16 enters in sequence into the partitions 20 arranged in the rear part of the element 1: the stem 16 remains essentially horizontal and allows a uniform crumpling between the four bodies 8 along the axis 2 in virtue of the guiding function of the seats 18. Due to the sliding friction of the stems 16, 16' against the collars 24 and due to inevitable collisions of the heads 17, 17' during the insertion in the last two partitions 20, 20', the devices 15, 15' generate longitudinal forces which are however negligible.

During the final step of deformation of the elements 1, 1', the heads 17, 17' of the stems 16, 16' are inserted in the openings 7, 7' of the plates 6, 6', which also perform an although minimum guiding function. As may be inferred from figure 3, at the end of the collision both the stems 16, 16' have undergone a negligible inclination with respect to axis 2, 2' and have corresponding heads 17 accommodated in the boxed transoms 3, 3'. Furthermore, the buffers carried by the two transoms 3, 3' do not come into reciprocal contact, as occurs instead in the solutions of the known art which have no guiding device. The final deformations of the elements 1, 1' appear specular and the operation of the plates 10, 10' is optimal because there is no significant lifting of the cars or phenomena of overlapping or climbing.

Most of the energy (approximately 70%) is dissipated by the deformations of the bodies 8, 8'. The remaining part is dissipated by the covering 9 and by the weld seams. The transoms 3, 3' are essentially rigid structural elements which do not serve any energy dissipation function but which ensure the support and the connection of the elements 1, 1' to the corresponding cars. In other words, the elements 1, 1' may alone dissipate all the necessary energy as specified in the designing step.

Therefore, the effectiveness of the element 1 is satisfactory and the accelerations transmitted to the car are relatively low and have a regular pattern.

Furthermore, as disclosed above, the energy is completely absorbed by the element 1 as specified in the designing step without plastically deforming the transom 3. The risk of derailing is practically null as compared to the known solutions in virtue of the device 15 in combination with the features of the teeth 13 of the anti-climber plate 10.

Having the seats 18 arranged directly within the bodies 8 allows to have a stem 16 of restricted axial length and, thus, to avoid the need for additional free spaces behind the transom 3 in the car. Having a plurality of seats 18, instead of only one, allows to exploit the guiding function thereof only when the seats 18 are actually engaged by the stem 16, without creating additional hindrance or volumes, further stiffening the element 1 for effectively stabilizing the deformation. The small dimensions required by the element 1 allow to install the element 1 even on vehicles already in operation to replace shock absorbing elements without guiding device.

During the deformation, the flared-shaped head 17 facilitates the gradual insertion of the stem 16 in the two rear seats 20 which are only engaged when the element 1 is not deformed, and the final insertion in the opening 7 and thus in the boxed transom 3. The length of the stem 16 is such to avoid the axial impact of the head 17 against the bottom of the transom 3 before the element 1 has absorbed all the provided energy. The stem 16 mainly works by bending and its tubular section combines a light weight and a high flexural strength modulus.

Finally, from the above, it is apparent that changes and variations may be applied to the described element 1 without departing from the scope of protection of the present invention.

Specifically, the tubular bodies 8 could be replaced by another collapsible boxed structure of different shape and/or dimensions; and/or the elements 1 could be connected to supporting structures other than the transom 3, e.g. to a supporting structure integrated in the chassis of the wagon or car; and/or the buffers 4 could be absent.

## Claims

1. A collapsible element (1) for absorbing energy in case of collision in a railway vehicle; the element comprising:
- an absorbing structure (8) extending along an essentially horizontal axis (2), plastically deformable for absorbing energy, connectable to a support (3) at one end and carrying an anti-climber plate (10) at the opposite end; wherein said absorbing structure (8) comprises four tubular bodies (8) arranged at corresponding side edges of said element (1);
- a guiding device (15) comprising:
a) a plurality of guiding seats (18), which are arranged in intermediate positions between the reciprocally spaced axial ends of said absorbing structure (8) ;
b) vertical partitions (20) fixed to said absorbing structure (8) in axially spaced positions;
wherein said partitions (20) are located among said tubular bodies (8) and are welded to said tubular bodies (8);
c) a stem (16) extending in said absorbing structure (8) and fixed to a rear face (11) of said anti-climber plate (10); said stem (16) having an axial length shorter than that of said absorbing structure (8) and engaging only part of said guiding seats (18) to be guided during the deformation of said absorbing structure (8);
wherein said stem (16) extends and is guided along said axis (2);
**characterized in that**:
the guiding seats (18) are carried by the corresponding vertical partitions (20); and
- each of said guiding seats (18) is made at the center of a respective said partition (20), coaxially with the other guiding seats (18) along said axis (2).

2. An element according to claim 1, **characterized by** comprising a covering (9) along the four sides of the element (1) to cover said tubular bodies (8); said partitions being welded also to said covering (9).

3. An element according to claim 1 or 2, **characterized in that** said tubular bodies (8) have a quadrangular cross section, and essentially have a conical-frustum shape which spreads towards said one end.

4. An element according to anyone of the preceding claims, **characterised in that** said stem (16) engages at least three fifths of said guiding seats (18).

5. An element according to anyone of the preceding claims, **characterized in that** said guiding seats (18) are equally spaced along said axis (2).

6. An element according to anyone of the preceding claims, **characterized in that** each said partition (20) comprises a central portion (22) which carries the corresponding guiding seat (18) and is thicker than the periphery (21) of the partition (20).

7. An element according to any one of the preceding claims, **characterized in that** said guiding seats (20) are defined by corresponding collars (24), which are coupled to corresponding central portions (22) of said partitions (20) and are axially less thick than the central portions (22) of said partitions (20).

8. An element according to any one of the preceding claims, **characterized in that** said anti-climber plate (10) has a front face (12) carrying a plurality of horizontal teeth (13) with a full triangular cross section, welded to said front face (12) in vertically and equally spaced positions, protruding by about 25 mm with respect to said front face (12), and having a vertex angle of approximately 60°.

## Patentansprüche

1. Ein Knautschelement (1) zum Absorbieren von Energie im Falle einer Kollision in einem Schienenfahrzeug, wobei das Element enthält:
- eine Absorptionsstruktur (8), welche sich entlang einer im Wesentlichen horizontalen Achse (2) erstreckt, welche plastisch verformbar ist, um Energie zu absorbieren, welche an einem Ende mit einer Abstützung (3) verbindbar ist und welche an dem gegenüberliegenden Ende eine Kletterschutzplatte (10) trägt;
wobei die Absorptionsstruktur (8) vier rohrförmige Körper (8) enthält, welche an entsprechenden seitlichen Kanten des Elementes (1) angeordnet sind;
- eine Leitvorrichtung (15), welche enthält:
a) eine Vielzahl von Leitsitzen (18), welche in Zwischenpositionen zwischen den beiderseits beabstandeten axialen Enden der Absorptionsstruktur (8) angeordnet sind;
b) vertikale Schottungen (20), welche in axial beabstandeten Positionen an der Absorptionsstruktur (8) befestigt sind;
wobei die Schottungen (20) zwischen den rohrförmigen Körpern (8) angeordnet sind und an den rohrförmigen Körpern (8) angeschweißt sind;
c) einen Bolzen (16), der sich in die Absorptionsstruktur (8) erstreckt und der an der rückwärtigen Anlagefläche (11) der Kletterschutzplatte (10) befestigt ist, wobei der Bolzen (16) eine axiale Länge aufweist, die kürzer ist als die der Absorptionsstruktur (8) und die nur in einen Teil der Leitsitze (18) eingreift, um während der Deformation der Absorptionsstruktur (8) geführt zu werden; wobei der Bolzen (16) sich entlang der Achse erstreckt und von dieser geführt wird;
**dadurch gekennzeichnet, dass**
- die Leitsitze (18) von den korrespondierenden vertikalen Schottungen getragen werden; und
- jede der Leitsitze (18) koaxial mit den anderen Leitsitzen (18) entlang der Achse (2) an der Achse einer entsprechenden Schottung (20) ausgebildet ist.

2. Element gemäß Anspruch 1, **gekennzeichnet durch** eine Abdeckung (9) entlang der vier Seiten des Elementes (1), um die rohrförmigen Körper (8) zu schützen, wobei die Schottungen ebenfalls an der Abdeckung angeschweißt sind.

3. Element gemäß Anspruch 1 oder 2, **dadurch gekennzeichnet, dass** die rohrförmigen Körper (8) einen viereckigen Querschnitt aufweisen und eine im Wesentlichen konisch kegelstumpfförmige Form aufweisen, welcher sich hin zu dem Ende erstreckt.

4. Element gemäß einem der vorherigen Ansprüche, **dadurch gekennzeichnet, dass** der Bolzen (16) zumindest in drei Fünftel der Leitsitze (18) eingreift.

5. Element gemäß einem der vorherigen Ansprüche, **dadurch gekennzeichnet, dass** die Leitsitze (18) entlang der Achse (2) gleich beabstandet sind.

6. Element gemäß einem der vorherigen Ansprüche, **dadurch gekennzeichnet, dass** jede der Schottungen (20) einen zentralen Bereich (22), der die entsprechenden Leitsitze (18) trägt und welcher dicker ist als der Umfang (21) der Schottungen (20).

7. Element gemäß einem der vorherigen Ansprüche, **dadurch gekennzeichnet, dass** die Leitsitze (20) durch entsprechende Manschetten (24) definiert sind, welche mit entsprechenden zentralen Bereichen (22) der Schottungen (20) gekoppelt sind und welche weniger dick ausgebildet sind, als die zentralen Abschnitte (22) der Schottungen (20).

8. Element gemäß einem der vorherigen Ansprüche, **dadurch gekennzeichnet, dass** die Kletterschutzplatte (10) einen Stirnseite (12) aufweist, welche eine Vielzahl von horizontalen Zähnen (13) mit einem vollständig dreieckigen Querschnitt trägt, welche vertikal und in gleichen beabstandeten Positionen an die Stirnseite (12) angeschweißt ist, welche um etwa 25 mm bezüglich der Stirmseite (12) vorsteht und welche einen Scheitelwinkel von ungefähr 60° aufweist.

## Revendications

1. Elément compressible (1) pour absorber l'énergie en cas de collision dans un véhicule ferroviaire; l'élément comprenant
une structure d'absorption (8) s'étendant le long d'un axe essentiellement horizontal (2), plastiquement déformable pour absorber l'énergie, pouvant être raccordée à un support (3) au niveau d'une extrémité et supportant une plaque anti-chevauchement (10) au niveau de l'extrémité opposée ;
dans lequel ladite structure d'absorption (8) comprend quatre corps tubulaires (8) agencés au niveau des bords latéraux correspondants dudit élément (1) ;
un dispositif de guidage (15) comprenant:
a) une pluralité de sièges de guidage (18) qui sont agencés dans des positions intermédiaires entre les extrémités axiales espacées de manière réciproque de ladite structure d'absorption (8);
b) des séparations verticales (20) fixées sur ladite structure d'absorption (8) dans des positions axialement espacées ;
dans lequel lesdites séparations (20) sont positionnées parmi lesdits corps tubulaires (8) et sont soudées auxdits corps tubulaires (8) ;
c) une tige (16) s'étendant dans ladite structure d'absorption (8) et fixée sur une face arrière (11) de ladite plaque anti-chevauchement (10) ; ladite tige (16) ayant une longueur axiale plus courte que celle de ladite structure d'absorption (8) et ne mettant en prise qu'une partie desdits sièges de guidage (18) pour être guidée pendant la déformation de ladite structure d'absorption (8) ;
dans lequel ladite tige (16) s'étend et est guidée le long dudit axe (2) ;
**caractérisé en ce que**:
les sièges de guidage (18) sont supportés par les séparations verticales (20) correspondantes ; et
chacun desdits sièges de guidage (18) est réalisé au centre de ladite séparation (20) respective, de manière coaxiale par rapport aux autres sièges de guidage (18) le long dudit axe (2).

2. Elément selon la revendication 1, **caractérisé en ce qu'**il comprend un couvercle (9) le long des quatre côtés de l'élément (1) pour couvrir lesdits corps tubulaires (8) ; lesdites séparations étant soudées également audit couvercle (9).

3. Elément selon la revendication 1 ou 2, **caractérisé en ce que** lesdits corps tubulaires (8) ont une section transversale quadrangulaire, et ont essentiellement une forme tronconique qui s'étale vers ladite une extrémité.

4. Elément selon l'une quelconque des revendications précédentes, **caractérisé en ce que** ladite tige (16) met en prise au moins trois cinquième desdits sièges de guidage (18).

5. Elément selon l'une quelconque des revendications précédentes, **caractérisé en ce que** lesdits sièges de guidage (18) sont également espacés le long dudit axe (2).

6. Elément selon l'une quelconque des revendications précédentes, **caractérisé en ce que** chacune desdites séparations (20) comprend une partie centrale (22) qui supporte le siège de guidage (18) correspondant et est plus épaisse que la périphérie (21) de la séparation (20).

7. Elément selon l'une quelconque des revendications précédentes, **caractérisé en ce que** lesdits sièges de guidage (20) sont définis par des colliers (24) correspondants, qui sont couplés aux parties centrales (22) correspondantes desdites séparations (20) et sont axialement moins épais que les parties centrales (22) desdites séparations (20).

8. Elément selon l'une quelconque des revendications précédentes, **caractérisé en ce que** ladite plaque anti-chevauchement (10) a une face avant (12) supportant une pluralité de dents horizontales (13) avec une section transversale complètement triangulaire, soudées sur ladite face avant (12) dans des positions espacées verticalement et à égale distance, faisant saillie d'environ 25 mm par rapport à ladite face avant (12) et ayant un angle de sommet d'approximativement 60°.
